# EUROPEAN PATENT SPECIFICATION

(11) **EP 4 074 575 B1**
(45) Date of publication and mention of the grant of the patent: **24.09.2025**
(21) Application number: 20903371.1
(22) Date of filing: 03.04.2020
(51) Int. Cl.: F16N 15/00, B61K 3/02, B60B 17/00, B60B 39/02, C23C 18/08, C23C 18/12, F16N 7/32

(54) **METHOD AND DEVICE FOR PROTECTING WHEELSETS AND A RAILROAD BED FROM WEAR**
VERFAHREN UND VORRICHTUNG ZUM SCHUTZ VON RADSÄTZEN UND DES SCHIENENBETTES GEGEN VERSCHLEISS
PROCÉDÉ ET DISPOSITIF DE PROTECTION DE PAIRES DE ROUES ET DE BANDE DE ROULEMENT DE RAIL CONTRE L'USURE

(30) Priority: 15.12.2019 RU 2019141598
(43) Date of publication of application: 19.10.2022
(73) Proprietor: NEOL Copper Technologies Limited, London EC3V 3QQ (GB)
(72) Inventor: MAMYKIN, Sergey Mihailovich, Moscow, 107076 (RU); PRIVALOV, Dmitry Viktorovich, Moscow, 121248 (RU)
(74) Representative: Makeeva, Svetlana
(86) International application number: PCT/RU2020/000181
(87) International publication number: WO 2021/126006

(56) References cited:
- JP-A- H10 273 047
- KR-A- 20110 069 369
- RU-C1- 2 547 125
- RU-C2- 2 283 702
- RU-C2- 2 283 702
- RU-C2- 2 388 635
- US-A- 4 736 818
- US-A- 5 213 697

## Description

### Technical field

The invention relates to the field of rail transport and may be used to increase the wear resistance of parts of a friction set of a wheel/rail coupling of rail transport.

### Prior art

From the "Prior Art", a method of increasing the wear resistance of the rolling surface of a wheelset is known, which is based on applying a coating that consists of a ductile copper-containing metal on the rolling surface. To prevent hydrogen wear of the rolling surface during the rotation of a wheelset, the rolling surface is first moistened in a liquid technological medium based on water and glycerol with the inclusion of ductile metal salts, and then a processing tool made of said metal is brought into contact with the rolling surface under a force, the magnitude of which causes a whistling sound, indicating the transfer of the tool metal to the treated surface, which, at the end of the process, is washed using a 5% solution of glycerol in water (Russian Federation Patent No. 2112663, Class B60B 17/00, published on 10 June 1998).

In addition, from the "Prior Art", a method of applying a coating that consists of ductile metals on the frictional surface of coupling components, for example, of a wheel/rail coupling, is known, which is based on applying an anti-wear coating in the dynamics of motion. For the purpose of restoring the wear of coupling components under mutual friction, an anti-wear coating that consists of ductile metals in the form of films with a thickness of 1.0-1.5 µm is simultaneously applied on the frictional surface of said coupling components by the selective transfer of ductile metal ions on the contacting surfaces of the components from the volume of the metal-plating ionisation solution located in the friction zone that contains, in the form of ions, up to 10% of the mass fraction of the applied composition that consists of ductile metals, uniformly distributed in the rest of the mass of liquid components having surface-active and reducing properties. In this case, the solution, depending on the pressure arising in the friction zone of coupling components, is supplied according to the intermittent or continuous injection scheme (Russian Federation Patent No. 2283702, Class B05D 1/04, published on 20 September 2006).

From the "Prior Art", a device for applying a coating that consists of ductile metals on the frictional surface of coupling components, for example, a wheel/rail coupling, is known, placed on the frames of the transport and the wheelset bogie and containing an inlet pneumatic valve, connected to the pneumatic line and to the electrical circuit of the transport control panel, a reservoir that contains the metal-plating ionisation solution, connected, by a pneumatic pipe, with the inlet pneumatic valve, an operating pneumatic valve, connected, through a throttle, to the inlet pneumatic valve and the electrical connection to the control unit for the passage of a programmed distance and switch-on time interval, a regulator including a pneumatic cylinder that contains a spring-loaded piston. It also includes an annular chamber, connected to the outlet of the reservoir duct and the inlet of the sprayer duct for ensuring the supply of the metal-plating ionisation solution through the duct and the injection, by the sprayer, of the metal-plating ionisation solution into the friction zone of coupling components, an auxiliary chamber, connected to the outlet of the reservoir duct, and the main chamber, connected to the inlet of the sprayer duct, a spring-loaded valve with lower and upper rods placed between them, a weathervane made with the possibility of contact with the lower rod, installed, with the support part, via a spring-loaded driving washer, into the regulator right support and, with the operating part, into its left support, which, by the force of the spring, maintains constant contact with the vertical plane of the bogie frame, while the sprayer is installed on the bogie frame (Russian Federation Patent No. 2283702, Class B05D 1/04, published on 20 September 2006).

The technical problem is that the known methods do not prevent wear caused by mechanical wear and the release of hydrogen in the friction zone, namely the process of wear of metals in the frictional contact zone, where the mechanisms of hydrogen embrittlement in the microlayers of frictional interaction during the diffusion of hydrogen from the metal volume into the zone of frictional interaction are the determining factors. Limiting the operation of the device for protecting wheelsets and a railroad bed from wear, depending on the ambient temperature, especially under the conditions of the North.

### Disclosure of invention

The task of the present group of inventions is to eliminate the above disadvantages.

The generalised technical result consists in more effectively protecting working surfaces from mechanical and hydrogen wear and ensuring the operation of the device at various ambient temperatures (-60 °C - +50 °C).

The technical result is provided by the fact that the method for protecting wheelsets and a railroad bed from wear consists in applying, for the purpose of protecting coupling components under mutual friction from wear, an anti-wear coating that consists of ductile metals in the form of films on the frictional surface of said coupling components by the selective transfer of ductile metal ions on the contacting surfaces of the components from the volume of the metal-plating ionisation solution located in the friction zone. In this case, the solution, depending on the pressure arising in the friction zone of coupling components, is supplied according to the intermittent or continuous injection scheme. A device for controlling the supply of a metal-plating ionisation solution emits a signal for activating or deactivating an electromagnetic valve mounted on a heated air duct connected to a reservoir that contains the metal-plating ionisation solution. When the electromagnetic valve is activated, the heated air enters through the branched duct into the reservoir that contains the metal-plating ionisation solution and into the nozzles. The metal-plating ionisation solution, under air pressure, is supplied from the reservoir that contains the metal-plating ionisation solution into a tube passing through the heated air duct with a branch to each nozzle. In the nozzle bodies, the heated air is mixed with the metal-plating ionisation solution, and an air-liquid medium is supplied to the side inner edge of the head of the outer rail in the corresponding track curve by spraying it in the area where the wheel tyre cone diameter is equal to D₂ and to the head of the inner rail in the corresponding track curve by spraying it in the area where the wheel tyre cone diameter is equal to D₁, while D₂ > D₁.

The technical result is also provided by the fact that the device for protecting wheelsets and a railroad bed from wear is placed on the frames of the transport and the wheelset bogie and contains a reservoir that contains the metal-plating ionisation solution, connected, by a tube, with nozzles that are installed on the bogie frame for ensuring the supply and injection of the metal-plating ionisation solution into the friction zone of the coupling components. It has a heated reservoir for storing air in it under a pressure of approximately 8 atm, an electromagnetic valve installed on a heated air duct, which has branches and connects, with one of its branches, the heated reservoir with the reservoir that contains the metal-plating ionisation solution and, with the two other branches, with the nozzles for ensuring the supply and injection of the metal-plating ionisation solution into the friction zone of the coupling components. In addition, the device has a tube that enables the supply of the metal-plating ionisation solution from the reservoir that contains the metal-plating ionisation solution into the nozzles through calibrated orifices made inside the nozzles, and passes through the heated air duct with a branch to each nozzle. The nozzles are made with the possibility of mixing the heated air with the metal-plating ionisation solution in their bodies and supplying an air-liquid medium to the side inner edge of the head of the outer rail in the corresponding track curve by spraying it in the area where the wheel tyre cone diameter is equal to D₂ and to the head of the inner rail in the corresponding track curve by spraying it in the area where the wheel tyre cone diameter is equal to D₁, while D₂ > D₁.

### Brief description of drawings

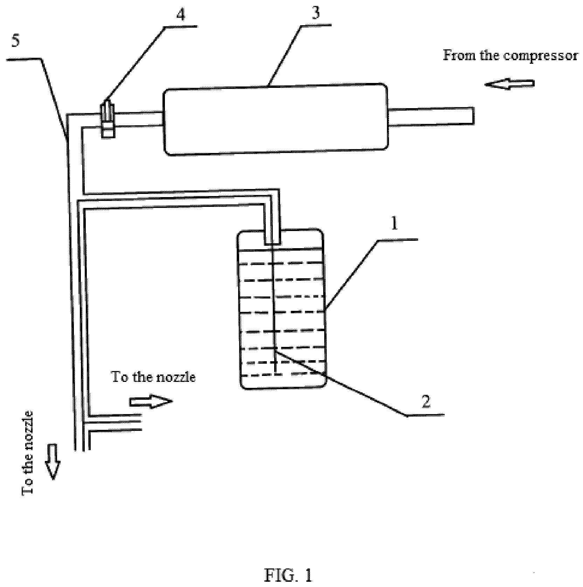

Fig. 1 shows the general diagram of the device;

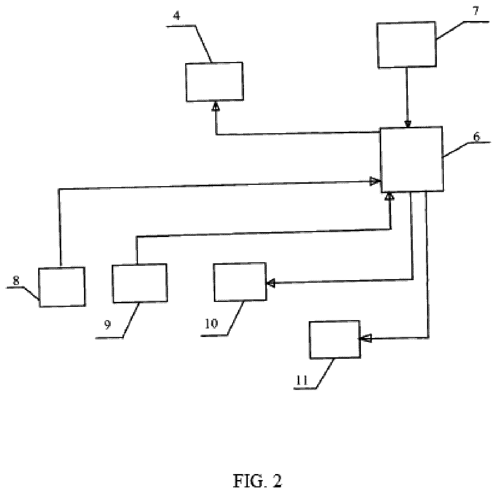

Fig. 2 is the block diagram featuring the configuration of the device control system;

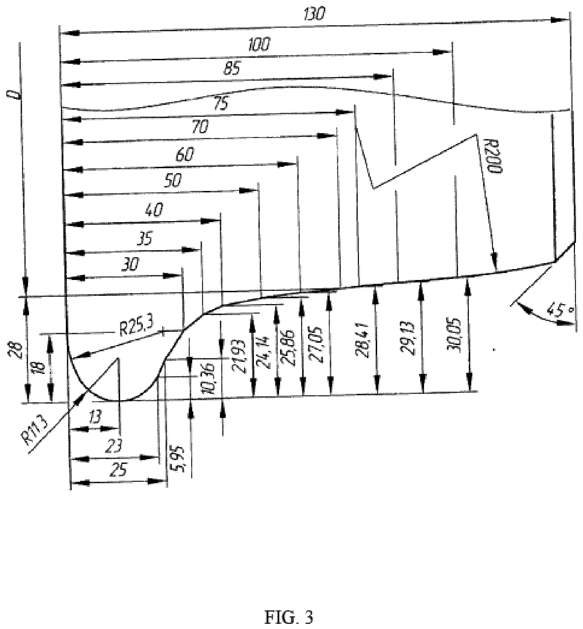

Fig. 3 shows a wheel flange of a wheelset;
Fig. 4 shows the position of a wheelset in the curve.

### The best way of carrying out the invention

A device for protecting wheelsets and a railroad bed from wear is placed on the frames of the transport and the wheelset bogie and contains Reservoir that Contains the Metal-Plating Ionisation Solution (1), connected, by Tube (2), with nozzles that are installed on the bogie frame for ensuring the supply and injection of the metal-plating ionisation solution into the friction zone of the coupling components. It has Heated Reservoir for Storing Air (3) in it under a pressure of approximately 8 atm (preferably 8 atm), Electromagnetic Valve (4) installed on Heated Air Duct (5), which has branches and connects, with one of its branches, Heated Reservoir (3) with Reservoir that Contains the Metal-Plating Ionisation Solution (1) and, with the two other branches, with the nozzles for ensuring the supply and injection of the metal-plating ionisation solution into the friction zone of the coupling components. In addition, the device has Tube (2) that enables the supply of metal-plating ionisation solution from Reservoir that Contains the Metal-Plating Ionisation Solution (1) into the nozzles through calibrated orifices made inside the nozzles and passes through Heated Air Duct (5) with a branch to each nozzle. The nozzles are made with the possibility of mixing the heated air with the metal-plating ionisation solution in their bodies and supplying an air-liquid medium to the side inner edge of the head of the outer rail in the corresponding track curve by spraying it in the area where the wheel tyre cone diameter is equal to D₂ and to the head of the inner rail in the corresponding track curve by spraying it in the area where the wheel tyre cone diameter is equal to D₁, while D₂ > D₁.

The method for protecting wheelsets and a railroad bed from wear consists in applying, for the purpose of protecting coupling components under mutual friction from wear, an anti-wear coating that consists of ductile metals in the form of films with a thickness of 1.0-1.5 µm on the frictional surface of said coupling components by the selective transfer of ductile metal ions on the contacting surfaces of the components from the volume of the metal-plating ionisation solution located in the friction zone that contains, in the form of ions, up to 10% of the mass fraction of the applied composition that consists of ductile metals, uniformly distributed in the rest of the mass of liquid components.

In this case, the solution, depending on the pressure arising in the friction zone of coupling components, is supplied according to the intermittent or continuous injection scheme. Device for Controlling the Supply of a Metal-Plating Ionisation Solution (6) emits a signal for activating or deactivating Electromagnetic Valve (4) mounted on Heated Air Duct (5) connected to the reservoir that contains the metal-plating ionisation solution.

Valve (4) is activated and deactivated by a servo drive (not shown in the figure), which is controlled by Control Device (6) and Unit (7) for determining the position of the means of transportation in relation to the beginning and end of a curved section of a railway track. Economical lubrication of rails and wheels of the means of transportation for reducing the wear of contacting sets is only carried out in this section. The lubrication system of this device may be automatically controlled using commands sent by the GLONASS global navigation system or by means of a computer, the hardware and software system of which contains programmed sections of a straight section of a rail track. The frequency of activating and deactivating Valve (4) allows for intermittent or continuous injection.

Control Device (6) receives a signal from Air Temperature Sensor (8) in Heated Air Storage Reservoir (3). When the air temperature in Reservoir (3) is 35 °C, the heater is activated by moving Heater Switch (10) to the 'on' position using a servo drive, and when the air temperature is 75 °C, the switch is turned off. In addition, Control Device (6) receives a signal from Air Pressure Sensor (9) in Heated Air Storage Reservoir (3). When the air pressure in Reservoir (3) is less than 8 atm (7.5-7.8 atm), the locomotive compressor is activated by moving Compressor Switch (11) to the 'on' position using a servo drive. In addition, the device may provide a metal-plating ionisation solution level sensor in Reservoir (1).

When Electromagnetic Valve (4) is activated, the heated air enters through Branched Duct (5) into Reservoir that contains the Metal-Plating Ionisation Solution (1) and into the nozzles. The metal-plating ionisation solution, under air pressure, is supplied from Reservoir that Contains the Metal-Plating Ionisation Solution (1) into Tube (2) passing through Heated Air Duct (5) with a branch to each nozzle. In the nozzle bodies, the heated air is mixed with the metal-plating ionisation solution, which is supplied through a calibrated orifice made inside the nozzle. The heated air enters each nozzle through Duct (5), the branches of which are connected to the nozzle bodies. An air-liquid medium is supplied to the side inner edge of the head of the outer rail in the corresponding track curve by spraying it in the area where the wheel tyre cone diameter is equal to D₂ and to the head of the inner rail in the corresponding track curve by spraying it in the area where the wheel tyre cone diameter is equal to D₁, while D₂ > D₁.

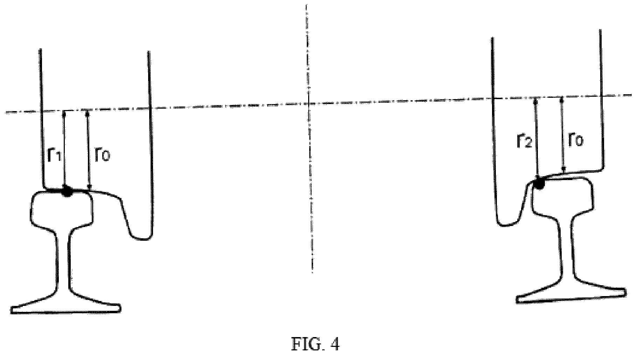

A wheelset should be seen as a whole; therefore, the angular speed of rotation of both wheels is always the same when moving in curves. Wheel one (see Fig. 4), due to centrifugal force, is tightly pressed against the side edge of the outer rail, wherein the diameter of the wheel is maximal in this area; while, at this moment, wheel two rolls on the inner rail having the minimal diameter. At this time, the anti-wear coating is supplied to the zones where the wheel contact with the rail occurs, namely, into the base of the wheel flange pressed against the rail and to the middle of the tyre of wheel two.

### Industrial applicability

The invention may be used in the field of railway transport. The advantages of the present group of inventions are as follows:
- protecting working surfaces from "hydrogen wear", which is the main factor causing wear;
- the absence of lubricants in the technological environment excludes any possibility of the adhesion of abrasives and reduces the likelihood of slipping at the moment of starting and going up hills;
- all-season system operation: application temperature range is -60 °C - +50 °C;
- improving the braking process, extending the service life of brake blocks;
- extending the service life of working surfaces of rails and the wheelsets of a locomotive, as well as of cars following it;
- environmental safety: there are no oil products in the technological environment;
- one filling is enough for ensuring the mileage between current repairs of TR-1.

## Claims

1. A method for protecting wheelsets and a railroad bed from wear that consists in applying, for the purpose of protecting coupling components under mutual friction from wear, an anti-wear coating that consists of ductile metals in the form of films on the frictional surface of said coupling components by a selective transfer of ductile metal ions on the contacting surfaces of the components from the volume of a metal-plating ionisation solution located in the friction zone, wherein the solution, depending on the pressure arising in the friction zone of the coupling components, is supplied according to an intermittent or continuous injection scheme, **characterised in that** a device for controlling the supply of the metal-plating ionisation solution (6) emits a signal for activating or deactivating an electromagnetic valve (4) mounted on a heated air duct (5) connected to a reservoir that contains the metal-plating ionisation solution (1); when the electromagnetic valve (4) is activated, heated air enters through the branched duct (5) into the reservoir that contains the metal-plating ionisation solution (1) and into nozzles; the metal-plating ionisation solution, under air pressure, is supplied from the reservoir that contains the metal-plating ionisation solution (1) into a tube (2) passing through the heated air duct (5) with a branch to each nozzle; in the nozzle bodies, the heated air is mixed with the metal-plating ionisation solution, and an air-liquid medium is supplied to the side inner edge of the head of the outer rail in a corresponding track curve by spraying it in the area where the wheel tyre cone diameter is equal to D₂ and to the head of the inner rail in the corresponding track curve by spraying it in the area where the wheel tyre cone diameter is equal to D₁, while D₂ > D₁.

2. A device for protecting wheelsets and a railroad bed from wear, which is placed on frames of a transport and a wheelset bogie and contains a reservoir that contains a metal-plating ionisation solution (1), connected, by a tube (2), with nozzles that are installed on the bogie frame for ensuring the supply and injection of the metal-plating ionisation solution into the friction zone of coupling components, **characterised in that** it has a heated reservoir for storing air (3) in it under a pressure of approximately 8 atm, an electromagnetic valve (4) installed on a heated air duct (5), which has branches and connects, with one of its branches, the heated reservoir (3) with the reservoir that contains the metal-plating ionisation solution (1) and, with the two other branches, with the nozzles for ensuring the supply and injection of the metal-plating ionisation solution into the friction zone of the coupling components; in addition, the device has the tube (2) that enables the supply of the metal-plating ionisation solution from the reservoir that contains the metal-plating ionisation solution (1) into the nozzles through calibrated orifices made inside the nozzles and passes through the heated air duct (5) with the branch to each nozzle, and the nozzles are made with the possibility of mixing heated air with the metal-plating ionisation solution in their bodies and supplying an air-liquid medium to the side inner edge of the head of the outer rail in a corresponding track curve by spraying it in the area where the wheel tyre cone diameter is equal to D₂ and to the head of the inner rail in the corresponding track curve by spraying it in the area where the wheel tyre cone diameter is equal to D₁, while D₂ > D₁.

## Patentansprüche

1. Verfahren zum Schutz von Radsätzen und des Schienenbettes gegen Verschleiß, bestehend darin, dass zum Schutz von Kupplungselementen gegen Verschleiß, die einander unter Reibung ausgesetzt sind, eine verschleißmindernde Beschichtung aus plastischen Metallen in Form von Filmen auf der Reibfläche dieser Kupplungselemente aufgebracht wird, und zwar durch selektiven Transfer von plastischen Metallionen auf die Kontaktflächen der Elemente aus dem Volumen einer metallbeschichtenden Ionisationslösung, welche sich im Reibungsbereich befindet, wobei die Lösung - abhängig vom Druck, der im Reibungsbereich der Kupplungselemente entsteht - nach einem intermittierenden oder kontinuierlichen Einspritzschema zugeführt wird, **dadurch gekennzeichnet, dass** eine Vorrichtung zur Steuerung der Zufuhr der metallbeschichtenden Ionisationslösung (6) ein Signal zur Aktivierung oder Deaktivierung eines elektromagnetischen Ventils (4) sendet, welches an einem beheizten Luftkanal (5) montiert ist, der mit einem Behälter mit der metallbeschichtenden Ionisationslösung (1) verbunden ist; bei Aktivierung des elektromagnetischen Ventils (4) strömt beheizte Luft durch den verzweigten Kanal (5) in den Behälter mit der metallbeschichtenden Ionisationslösung (1) und in die Düsen; unter Luftdruck wird die metallbeschichtende Ionisationslösung aus dem Behälter mit der metallbeschichtenden Ionisationslösung (1) in ein Rohr (2) geleitet, das durch den beheizten Luftkanal (5) verläuft und einen Abzweig zu jeder Düse besitzt; in den Düsenkörpern wird die beheizte Luft mit der metallbeschichtenden Ionisationslösung gemischt und ein Luft-Flüssigkeits-Medium wird durch Versprühen an die seitliche Innenkante des Schienenkopfes der äußeren Schiene im entsprechenden Gleisbogen in dem Bereich aufgebracht, wo der Kegeldurchmesser des Radreifens D₂ entspricht, sowie an den Schienenkopf der inneren Schiene im entsprechenden Gleisbogen in dem Bereich, wo der Kegeldurchmesser des Radreifens D₁ entspricht, wobei D₂ > D₁.

2. Vorrichtung zum Schutz von Radsätzen und des Schienenbettes gegen Verschleiß, die auf den Rahmen eines Fahrzeugs und eines Radsatz-Drehgestells montiert ist und einen Behälter mit einer metallbeschichtenden Ionisationslösung (1) enthält, der über ein Rohr (2) mit Düsen verbunden ist, die am Drehgestellrahmen angebracht sind, um die Zufuhr und Einspritzung der metallbeschichtenden Ionisationslösung in den Reibungsbereich der Kupplungselemente sicherzustellen, **dadurch gekennzeichnet, dass** die Vorrichtung über einen beheizten Luftbehälter (3) verfügt, in dem Luft mit einem Druck von etwa 8 atm gespeichert wird, sowie über ein elektromagnetisches Ventil (4), das auf einem beheizten Luftkanal (5) installiert ist, welcher verzweigt ist und mit einem seiner Abzweige den beheizten Luftbehälter (3) mit dem Behälter mit der metallbeschichtenden Ionisationslösung (1) verbindet und über zwei weitere Abzweige mit den Düsen verbindet, um die Zufuhr und Einspritzung der metallbeschichtenden Ionisationslösung in den Reibungsbereich der Kupplungselemente sicherzustellen; zusätzlich verfügt die Vorrichtung über ein Rohr (2), das die Förderung der metallbeschichtenden Ionisationslösung aus dem Behälter mit der metallbeschichtenden Ionisationslösung (1) zu den Düsen durch kalibrierte Öffnungen innerhalb der Düsen ermöglicht und durch den beheizten Luftkanal (5) mit einem Abzweig zu jeder Düse geführt ist, und die Düsen sind so ausgeführt, dass in ihrem Körper beheizte Luft mit der metallbeschichtenden Ionisationslösung vermischt wird und ein Luft-Flüssigkeits-Medium durch Versprühen an die seitliche Innenkante des Schienenkopfes der äußeren Schiene im entsprechenden Gleisbogen in dem Bereich aufgebracht wird, wo der Kegeldurchmesser des Radreifens D₂ entspricht, sowie an den Schienenkopf der inneren Schiene im entsprechenden Gleisbogen in dem Bereich, wo der Kegeldurchmesser des Radreifens D₁ entspricht, wobei D₂ > D₁.

## Revendications

1. Procédé de protection de paires de roues et de bande de roulement de rail contre l'usure, qui consiste à appliquer, dans le but de protéger contre l'usure les éléments en contact soumis à un frottement réciproque, un revêtement anti-usure constitué de métaux ductiles sous forme de films appliqués sur la surface de frottement desdits éléments en contact, par un transfert sélectif d'ions de métaux ductiles sur les surfaces de contact des éléments à partir du volume d'une solution d'ionisation pour placage métallique située dans la zone de frottement ; dans lequel la solution, en fonction de la pression qui s'exerce dans la zone de frottement des éléments en contact, est fournie selon un schéma d'injection intermittente ou continue, **caractérisé par le fait qu'**un dispositif de commande de l'alimentation en solution d'ionisation pour placage métallique (6) émet un signal pour activer ou désactiver une vanne électromagnétique (4) montée sur un conduit d'air chauffé (5) relié à un réservoir qui contient la solution d'ionisation pour placage métallique (1), lors de l'activation de la vanne électromagnétique (4), l'air chauffé entre par le conduit ramifié (5) dans le réservoir qui contient la solution d'ionisation pour placage métallique (1) et dans les buses ; sous la pression de l'air, la solution d'ionisation pour placage métallique est alimentée à partir du réservoir qui contient la solution d'ionisation pour placage métallique (1) dans un tube (2) qui passe par le conduit d'air chauffé (5) ayant une ramification vers chaque buse ; dans le corps des buses, l'air chauffé est mélangé à la solution d'ionisation pour placage métallique et un fluide air-liquide est dirigé vers le bord intérieur latéral du champignon du rail extérieur dans une courbe correspondante de la voie, en pulvérisant la zone où le diamètre du cône du bandage de roue est égal à D₂ et vers le champignon du rail intérieur dans la courbe correspondante de la voie, en pulvérisant la zone où le diamètre du cône du bandage de roue est égal à D₁, où D₂ > D₁.

2. Dispositif de protection de paires de roues et de bande de roulement de rail contre l'usure, placé sur les châssis d'un transport et d'un bogie de paire de roues, composé d'un réservoir qui contient une solution d'ionisation pour placage métallique (1), connecté, à travers un tube (2), aux buses installées sur le châssis du bogie pour assurer l'alimentation et l'injection de la solution d'ionisation pour placage métallique dans la zone de frottement des éléments en contact, **caractérisé par le fait qu'**il contient un réservoir chauffé de stockage de l'air (3) sous une pression d'environ 8 atm, une vanne électromagnétique (4) installée sur un conduit d'air chauffé (5) qui a des ramifications et relie, par l'une de ses ramifications, le réservoir chauffé (3) au réservoir qui contient la solution d'ionisation pour placage métallique (1) et, par ses deux autres ramifications, aux buses qui assurent l'alimentation et l'injection de la solution d'ionisation pour placage métallique dans la zone de frottement des éléments en contact ; en outre, le dispositif est pourvu d'un tube (2) qui permet l'alimentation en solution d'ionisation pour placage métallique à partir du réservoir qui contient la solution d'ionisation pour placage métallique (1) dans les buses, à travers les orifices calibrés réalisés à l'intérieur des buses, et passe par le conduit d'air chauffé (5) avec une ramification vers chaque buse, les buses étant construites de manière à permettre de mélanger l'air chauffé à la solution d'ionisation pour placage métallique dans leur corps et de diriger un fluide air-liquide vers le bord latéral intérieur du champignon du rail extérieur dans une courbe correspondante de la voie, en pulvérisant la zone où le diamètre du cône du bandage de roue est égal à D₂ et vers le champignon du rail intérieur dans la courbe correspondante de la voie, en pulvérisant la zone où le diamètre du cône du bandage de roue est égal à D₁, où D₂ > D₁.
